# EUROPEAN PATENT SPECIFICATION

(11) **EP 2 340 387 B1**
(45) Date of publication and mention of the grant of the patent: **10.08.2016**
(21) Application number: 09822260.7
(22) Date of filing: 08.10.2009
(51) Int. Cl.: F16L 37/36, F16L 29/04, F16L 37/35, F16L 37/42

(54) **COUPLING MEMBER**
KOPPLUNGSELEMENT
ELÉMENT D'ACCOUPLEMENT

(30) Priority: 23.10.2008 SE 0802261
(43) Date of publication of application: 06.07.2011
(73) Proprietor: Mann Teknik AB, 542 34 Mariestad (SE)
(72) Inventor: BÄCKSTRÖM, Markus, 542 32 Mariestad (SE)
(74) Representative: Andrén, Bertil
(86) International application number: PCT/SE2009/000440
(87) International publication number: WO 2010/047633

(56) References cited:
- EP-A2- 0 843 122
- EP-A2- 0 843 122
- WO-A1-01/07331
- FR-A- 1 240 323
- US-A- 2 208 286
- US-A1- 2008 185 837

## Description

The present invention relates to a coupling member, comprising
- a tubular housing having an axially through-going opening,
- a tubular carrier having an axially through-going, cylindrical opening and being rotatably arranged and axially fixed in the housing,
- an elongated piston comprising a valve body arranged in the carrier for sealing of its through-going opening,
- a cam device comprising at least one cam groove and associated cam follower and adapted to be actuated by rotation of the housing relative to the carrier in order to move the piston relative to the carrier and
- a flow passage adapted to be opened and closed by movement of the piston out of or into, respectively, the carrier by means of said cam device,
- wherein the flow passage is arranged in the piston itself,
- wherein the cam device is adapted to be in engagement with the outside of the piston, and
- wherein the flow passage is free of surfaces other than the ones delimiting the flow passage itself.

A coupling according to the preamble of claim 1 is known WO0107331A.

Assemblies comprising couplings which are opened and closed automatically when a hose or filling arm is connected or disconnected, respectively, are used for fluid transfer between a stationary container and a mobile container, such as tanker lorries and railroad tankers. The coupling consists of two coupling halves or coupling members, usually denominated male member and female member, each comprising a valve-forming piston. The two ends of the male and female members facing each other are designed to together form a bayonet catch. The piston of the male member is normally spring-biased to assume a self-closing initial or resting position. The male member is arranged in a connection to the stationary container, while the female member is carried by a hose. The interconnection of the female and male members and the fluid connection between the stationary and mobile containers are established by rotating the female member relative to the male member. During the initial rotation, these coupling halves are first locked so that they become axially fixed to each other, whereupon they are mechanically opened during the continued rotation so that their flow passages are interconnected with each other. The mechanical opening is accomplished by means of the piston of the female member being displaced in a direction toward the piston of the male member. For this purpose, the female member comprises a carrier device comprising cam profiles, which transform said rotational motion into a translational movement of the piston. The prior couplings have female members with cam devices which are so arranged internally that they, and associated elements such as carrier and piston rod, come into contact with the through-flowing fluid. Material from the fluid will gradually adhere to the surfaces of the cam device and associated elements, said material forming contaminants which, in many cases, are difficult to remove completely during a subsequent cleaning procedure of flushing with a cleaning liquid. This is especially the case with sticky fluids and particle-containing fluids. The problem is particularly serious in the food industry and the paint industry, where the cleaning process is very important.

A coupling with a female member of the above-described kind is known from e.g. SE 507 753 C2.

The object of the present invention is to substantially reduce the above-mentioned problem and to produce an improved coupling member in which all surfaces, coming in contact with the through-flowing product, are easy to clean so that the greatest possible cleanliness can be ensured in order to prevent contamination of fluid during subsequent use of the coupling member.

The coupling member according to the invention is characterized in that at least one of the at least one cam groove is helical and arranged on the outside of the piston, and an associated cam follower is arranged in an opening of the carrier extending in the circumferential direction in order to be received in and interact with said at least one helical cam groove, and that the housing is adapted to be rotated relative to the carrier for actuating the cam device for movement of the piston relative to the carrier.

The fact that the flow passage is free of surfaces other than the ones delimiting the flow passage itself means that there are no structural elements whatsoever, such as e.g. cam grooves, cam followers, piston rod, springs, arranged in the flow passage, which structural elements form surfaces with which the through-flowing fluid comes in contact and therefore constitute sites where contaminants, which are difficult to clean when flushing with a flushing liquid, can be deposited or formed.

The invention will be described more closely with reference to the drawings, in which
Fig. 1 is an end view of a female member for a coupling according to a first embodiment of the invention.
Fig. 2 is a longitudinal sectional view of the female member along the lines A-A in Fig. 1.
Fig. 3 is a longitudinal sectional view of the female member along the lines B-B in Fig. 1.
Fig. 4 is a perspective view of the housing of the female member in Figs. 1-3.
Fig. 5 is a vertical longitudinal section of the housing in Fig. 4.
Fig. 6 is a perspective view of the carrier of the female member in Figs. 1-3.
Figs. 7 and 8 are an end view and a longitudinal section, respectively, of the carrier in Fig. 6.
Fig. 9 is a perspective view of the piston of the female member in Figs. 1-3.
Figs. 10 and 11 are two side views of the piston in Fig. 9.
Fig. 12 is a longitudinal sectional view of the piston along the line A-A in Fig. 10.
Fig. 13 is a cross-sectional view of the female member in Figs. 1-3 and shows the cam grooves of the cam device.
Fig. 14 is another cross-sectional view of the female member in Figs. 1-3 and shows the cam grooves and the cam followers of the cam device.
Fig. 15 is an end view of a male member, which is suited for use together with the female member in Figs. 1-3 for the formation of a coupling.
Fig. 16 is a longitudinal sectional view of the male member along the line A-A in Fig. 15.
Fig. 17 is a perspective view of the housing of the male member in Figs. 15-16.
Fig. 18 is a side view of the housing in Fig. 17.
Fig. 19 is a longitudinal sectional view of the housing along the line A-A in Fig. 18.
Fig. 20 is a perspective view of the piston of the male member in Figs. 15-16.
Fig. 21 is a side view of the piston in Fig. 20.
Fig. 22 is a longitudinal sectional view of the piston in Figs. 20 and 21, which section is taken in two planes, intersecting each other in the centre axis at an obtuse angle (170°).
Figs. 23 and 24 are longitudinal sectional views of the female member and the male member before and after, respectively, the interconnection.

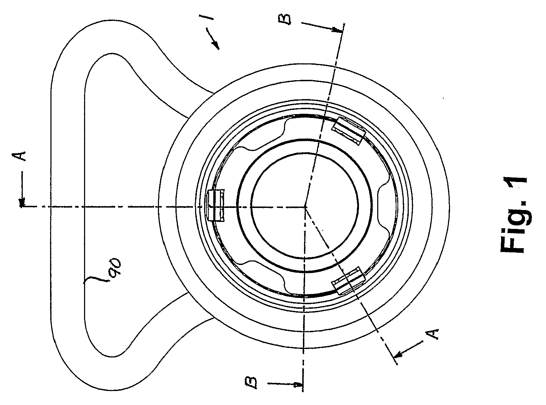

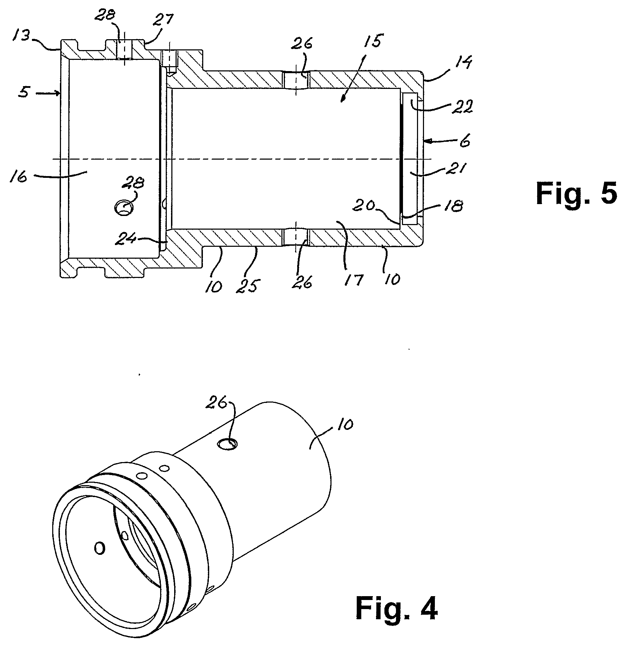

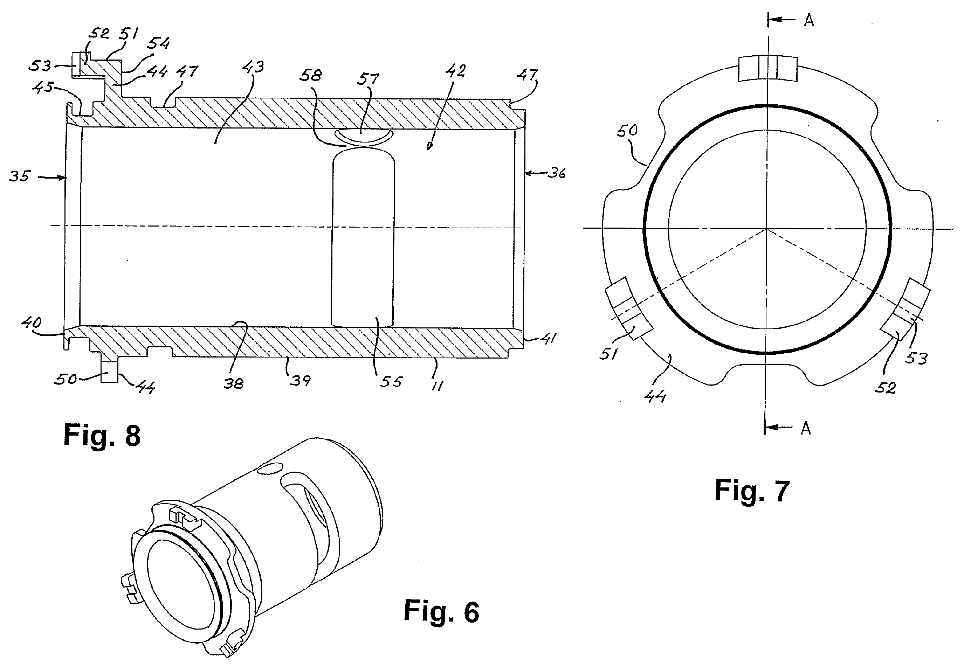

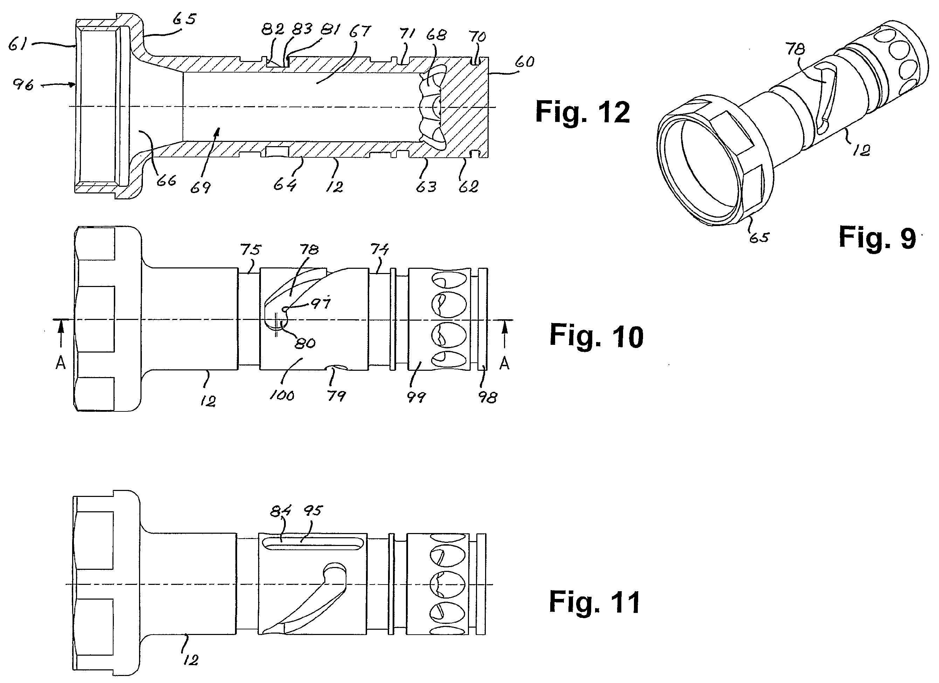

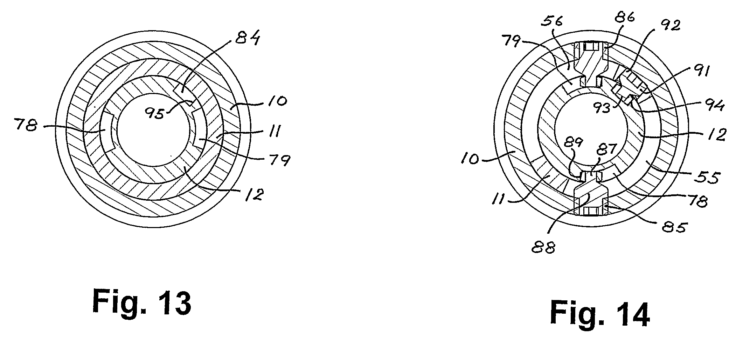

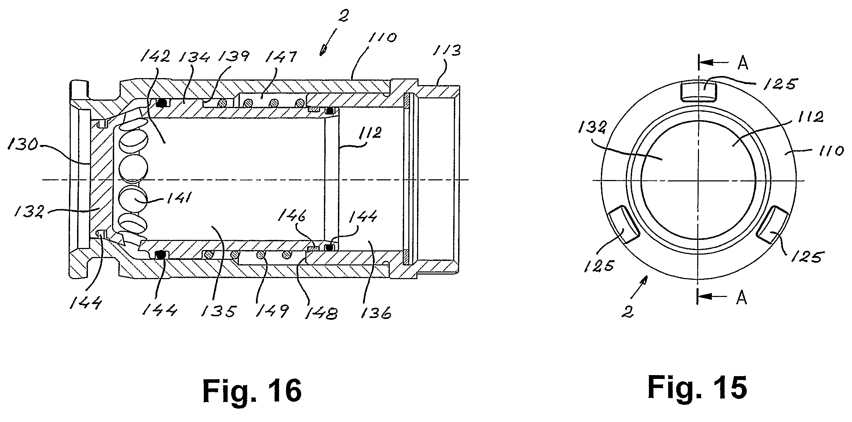

Referring to Figs. 1-3, there is shown a first coupling member or female member 1 for a coupling, said coupling comprising a second coupling member or male member 2, which is shown more closely in Figs. 16, 22, 23. The end portions of the couplings 1, 2 facing each other comprise engagement means which form a bayonet lock when they are brought together and rotated about the centre axis of the coupling. The female member 1 comprises a tubular housing 10 (see Fig. 5), which has an axially through-going opening 15, and a tubular carrier 11 (see fig. 8), which has an axially through-going opening 42 and which is axially fixed in the housing 10, which is rotatably arranged relative to the carrier 11. Furthermore, the female member comprises an elongated piston 12 (see Fig. 10), which is arranged in the carrier 11 for sealing of its through-going opening 42, and a cam device, which comprises at least one cam groove 78, 79; 84 (see Figs. 10-12) and associated cam follower 85, 86; 91 (see Fig. 14). The cam device is adapted to be actuated by rotation of the housing 10 relative to the carrier 11. Furthermore, there is a flow passage 69, which is adapted to be opened and closed by movement of the piston 12 out of or into, respectively, the carrier 11 by means of said cam device.

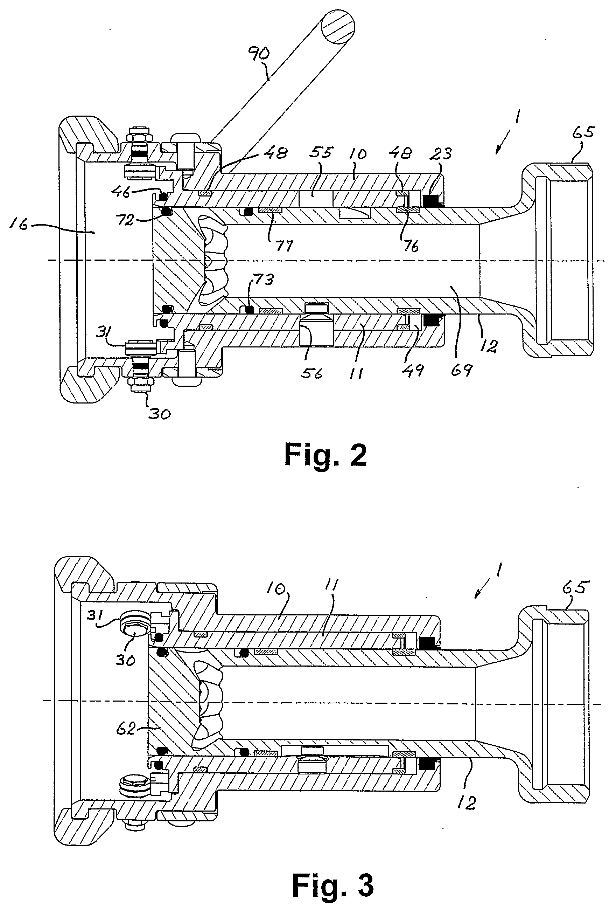

As is evident from Fig. 5, the housing 10 is made in one piece and has an open, i.e. openworked, front end surface 13, and an open, i.e. openworked, rear end surface 14, said end surfaces 13, 14 being parallel with each other. Thereby, the front end surface 13 surrounds a front end opening 5, and the rear end surface 14 surrounds a rear end opening 6 of the housing 10. Accordingly, the axially through-going opening 15 of the housing 10 extends between the two end openings 5, 6. The axially through-going opening 15 comprises a cylinder-shaped front space 16, which extends from the front end surface 13, and which transitions into a cylinder-shaped inner space 17, which has a smaller diameter than the front space 16 and extends to an annular, radial flange 18, which has a smaller diameter than the inner space 17 and which thereby forms an annular support surface 20, facing toward the inner space 17. In the axially short space 21 being present between the flange 18 and the open rear end surface 14, there is an annular groove 22 for a sealing 23 (see Fig. 2). Due to the above-mentioned diameter difference, an annular, radial support surface 24 is formed at the transition between the front space 16 and the inner space 17. The wall portion 25 of the housing 10, delimiting its axially inner space 17, is provided with two radial, diametrically opposite, threaded apertures 26, which are located at a predetermined distance from the last-mentioned support surface 24. The wall portion 27 of the housing, which surrounds the front space 16, is provided with three radial apertures 28, which are uniformly distributed in the circumferential direction and which are adapted for mounting of roller axles 30, which extend into the front space 16 to support engagement rollers 31 (see Fig. 2).

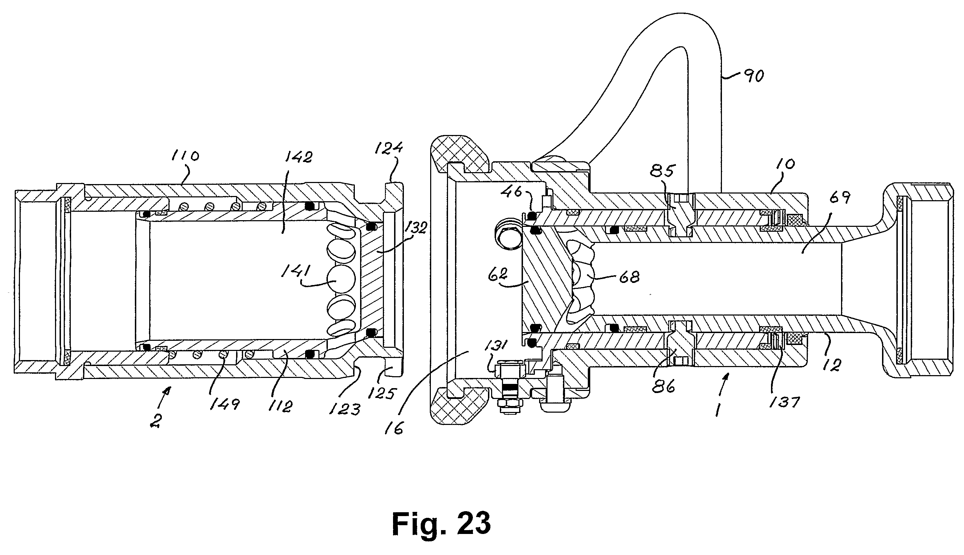

The carrier 11 shown more closely in Figs. 5 and 8 is made in one piece and has an open, i.e. openworked, front end surface 40, and an open, i.e. openworked, rear end surface 41, said open end surfaces 40, 41 being parallel with each other. Thereby, the front end surface 40 surrounds a front end opening 35, and the rear end surface 41 surrounds a rear end opening 36 of the carrier 11. Accordingly, the axially through-going opening 42 of the carrier 11 extends between the end openings 35, 36 and forms a cylinder-shaped space 43. On its outside, the carrier 11 is formed with a peripheral, support-forming, radial flange 44, which is located at a predetermined small distance from the front end surface 40. Between the front end surface 40 and the supporting flange 44, there is an annular groove 45 on the outside of the cylinder wall for a suitable ring seal 46 (see Fig. 2). Furthermore, on the outside of the cylinder wall, between the supporting flange 44 and the rear end surface 41, there are two annular grooves 47 for annular slide bearings 48 (see Fig. 2). The cylinder-shaped wall of the carrier 11 has an external, rotationally symmetrical cylinder surface 39, which has a diameter being slightly smaller than the diameter of the inner space 17 of the housing 10 so that the carrier 11, with a sliding fit, can be inserted with its rear end surface 41 into the inner space 17 of the housing 10 via said front end opening 5, while said slide bearing 48 is in sliding contact with the opposite, internal, rotationally symmetrical cylinder surface 38 of the space 17 of the housing. Furthermore, the portion of the cylinder-shaped wall of the carrier 11 which extends between the supporting flange 44 and the rear end surface 41 is slightly shorter than the space 17 of the housing 10 so that a small gap 49 (see Fig. 2) is formed between the rear end surface 41 of the carrier 11 and said support surface 20 of the housing 10, in which gap 49 a resilient ring 37 (see Fig. 23) is placed in order to produce a slightly resilient clamping of the carrier 11 in the housing 10, where the carrier 11 is axially locked against the contact rollers 31 (see Fig. 2). The radial supporting flange 44 has three radial recesses 50, which are evenly distributed in the circumferential direction, and three axial shoulders 51, which are evenly distributed in the circumferential direction and displaced 60° relative to the recesses 50 as counted from their centre. The shoulders 51 project from that side of the supporting flange 44 which is located closest to the front end surface 40, and are thus located at a distance from the cylinder-shaped wall 25 of the carrier 11 and end immediately before the plane of the front end surface 40. The free end portion 52 of each shoulder 51 is provided with a radially through-going slot 53. Between the supporting flange 44 and the rear end surface 41, and at a predetermined distance from the radial, rear support surface 54 of the supporting flange 44, the cylinder-shaped wall of the carrier 11 is provided with two diametrically opposite openings 55, 56 (see Fig. 2) which, in the circumferential direction, extend in a direction toward each other in one and the same plane, wherein each opening 55, 56 encloses a sector angle of about 110°. A radially through-going, threaded aperture 57 is formed in one of the remaining portions 58 of the wall, said portions being located between the openings 55, 56. Furthermore, the cylinder-shaped wall of the carrier 11 has an inner, rotationally symmetrical cylinder surface 38, thus delimiting the opening 42 of the carrier 11.

The multi-functional piston 12 shown more closely in Figs. 10-12 is also made in one piece and has a front end with a non-openworked end surface 60, which forms a pressure surface, and a rear end with an open, i.e. openworked, end surface 61. Thereby, the rear end surface 61 surrounds a rear end opening 96. The piston 12 comprises a valve body 62, which extends a predetermined length from the non-openworked pressure surface 60, a side passage portion 63 which connects to, i.e. transitions directly into, the valve body 62, and a guiding portion 64 which connects to, i.e. transitions directly into, the side passage portion 63. In the shown embodiment, the valve body 62, the side passage portion 63 and the guiding portion 64 have external, rotationally symmetrical cylinder surfaces 98, 99, 100 with the same circular cross-sectional area, i.e. the same diameter. The piston 12 further comprises an annular rear connecting portion 65, which surrounds a conical space 66 and which has internal threads for connecting the piston 12 via the end opening 96 to a hose (not shown). The cylinder-shaped guiding portion 64 surrounds a cylinder-shaped space 67, which transitions into and is in open communication with the space 66 of the connecting portion 65. The space 67 of the guiding portion 64 extends to the side passage portion 63. The side passage portion 63 is provided with a plurality of side apertures 68, evenly distributed in the circumferential direction, which together form a side passage and which are diagonally positioned and extend diagonally forward through the side passage portion 63 from the space 67 of the guiding portion 64 to the outside of the piston 12 in order to open immediately behind the valve body 62 or, as shown, within a rear surface portion of the valve body 62 while forming oval side openings on the outside of the piston 12. The centre lines of the side apertures 68 intersect the centre axis of the piston 12. Thereby, the piston 12 exhibits a flow passage 69, which is formed by an elongated, axial passage portion, comprising said spaces 66, 67 of the connecting portion 65 and the guiding portion 64, and a diagonal passage portion, comprising said side apertures 68 of the side passage portion 63. The total cross-sectional area of the side apertures 68 substantially corresponds to the cross-sectional area of the space 66 of the axial passage portion. Since the piston 12 is made in a single moulded piece, the flow passage 69 is completely free of joints. Such joints could otherwise also constitute sites where contaminants from the fluid could be deposited or formed. The valve body 62 and the guiding portion 64 are provided with external, annular grooves 70, 71 for suitable sealing rings 72, 73 (see Fig. 1) for sealing interaction with the cylinder-shaped inside of the carrier 11, i.e. said rotationally symmetrical cylinder surface 38 which has a slightly larger diameter than the outside of the guiding portion 64 so that the piston 12, with a sliding fit, can be inserted into the carrier 11 via the end openings 6, 36 of the housing 10 and carrier. The guiding portion 64 is further provided with a first annular groove 74, which is located at a small distance from the side passage portion 63, and a second groove 75, which is located at a predetermined distance from the first groove 74 and closer to the connecting portion 65 than the first groove 74. In these grooves 74, 75, suitable slide bearings 76, 77 (see Fig. 2) are placed.

The cam device comprises two cam grooves 78, 79 (see Figs. 10-14), which are arranged in the outside of the guiding portion 64 of the piston 12 and extend around it in the same direction in a helical curve. At their ends, each cam groove 78, 79 comprises short extensions 80, aligned in the circumferential direction, which extend in the circumferential direction so that the four extensions 80 are located in pairs in two parallel planes, which are perpendicular to the centre axis of the piston 12. The cam groove 78, 79 is defined by a front cam profile 81, a rear cam profile 82, and a bottom surface 83, which extends between the two cam profiles 81, 82, wherein the two cam profiles 81, 82 run in parallel with each other. Furthermore, in the cam groove 78, 79, two locking shoulders 97 (see Fig. 10) are formed at the edge transition to the extension 80 of the respective cam profile 81, 82. Finally, an axial cam groove 84 is formed in the outside of the guiding portion 64, said cam groove 84 extending between the two diagonally positioned grooves 78, 79.

In addition to said two helical cam grooves 78, 79, said motion transferring cam device comprises two cam followers 85, 86 (see Fig. 14) which, in the shown embodiment, are constituted of roller axles, each comprising an inner axle journal 87, an outer screw portion 88, and a roller 89. The screw portions 88 have external threads, by means of which the roller axles 85, 86 are screwed into the threaded apertures 26 of the housing 10. The screw portions 88 then extend through a respective one of the two peripheral openings 55, 56 of the carrier 11 in order to support the rollers 89, which are placed and run in the diagonally positioned or helical grooves 78, 79 on the outside of the piston 12, with their axle journals 87. During a rotation of the housing 10 relative to the carrier 11 by means of a handle 90, the rollers 89 will thus press against one of the guiding cam profiles 81, 82 and follow the cam grooves 78, 79, wherein the thus applied turning force from the housing 10 is transferred to the piston 12 via the roller axles 85, 86, so that the piston 12 is forced to move in either direction, depending on in which direction the housing 10 can be rotated relative to the carrier 11. The motion transferring cam device further comprises a similar cam follower 91 in the form of a roller axle which, with its screw portion 92, is screwed into the threaded aperture 57 of the carrier 11, and which, with its axle journal 93, supports a roller 94, which is placed and runs in the axial cam groove 84. The mentioned turning force, which is applied against the cam profiles 81, 82 of the diagonal cam grooves 78, 79, will thereby be absorbed by the roller axle 91 and the carrier 11 via the cam surfaces 95 of the axial cam groove 84. Thereby, the piston 12 will be forced to describe a forward or rearward axial movement relative to the carrier 11 and the housing 10 in order to open or close, respectively, the flow passage 69 of the piston 12 by means of its valve body 62.

The housing 10, the carrier 11, and the piston 12 have their centre axes, as well as the centre axes of their inner and outer cylinder surfaces, coinciding with the centre axis of the coupling member 2.

The second coupling member or male member 2 is shown in Figs. 15, 16, 23, 24. It comprises a cylinder-shaped housing 110, a piston 112, and a connecting sleeve 113.

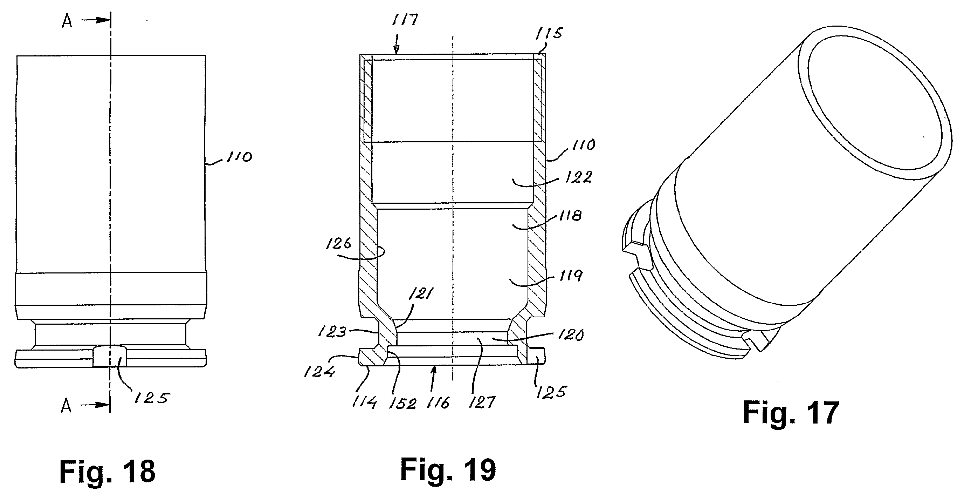

As is more evident from Figs. 16, 19, the housing 110 is made in one cylinder-shaped piece. It has an open, i.e. openworked, front end surface 114 and an open, i.e. openworked, rear end surface 115, said end surfaces 114, 115 being parallel with each other and each delimiting a respective end opening 116, 117. The housing 110 has an axially through-going opening 118, which thus extends between the two end openings 116, 117, and comprises a cylinder-shaped, axially inner space 119 and a front space 120 with a plurality of rotationally symmetrical, conical and cylindrical surfaces, transitioning into each other and having a sealing function or seat forming function, such as the formation of a conical seat surface 121. Furthermore, the through-going opening 118 has a rear space 122, which has its cylinder-shaped surface being located closest to the rear end surface 115 threaded for screwing in said connecting portion 113. The axially inner space 119 has a rotationally symmetrical cylinder surface 126 with a predetermined diameter and a sealing cylinder surface 127. An annular groove 123 is formed in the housing on the outside thereof, at a predetermined small distance from the front end surface 114 and with a predetermined depth, wherein a radial flange 124 is formed between the front end surface 114 and the annular groove 123. This flange 124 is provided with three radial and axially through-going recesses 125, uniformly distributed in the circumferential direction, wherein the annular groove 123 thus becomes axially available from the front end surface 114 of the housing 110 via said recesses 125. Between the sealing surface 127 and the end opening 114, there is a broadened, sealing cylinder surface 152, which is thus surrounded by the flange 124 and which is adapted to receive the free end portion of the carrier 11 of the female member 1 in order to sealingly interact with its sealing 46.

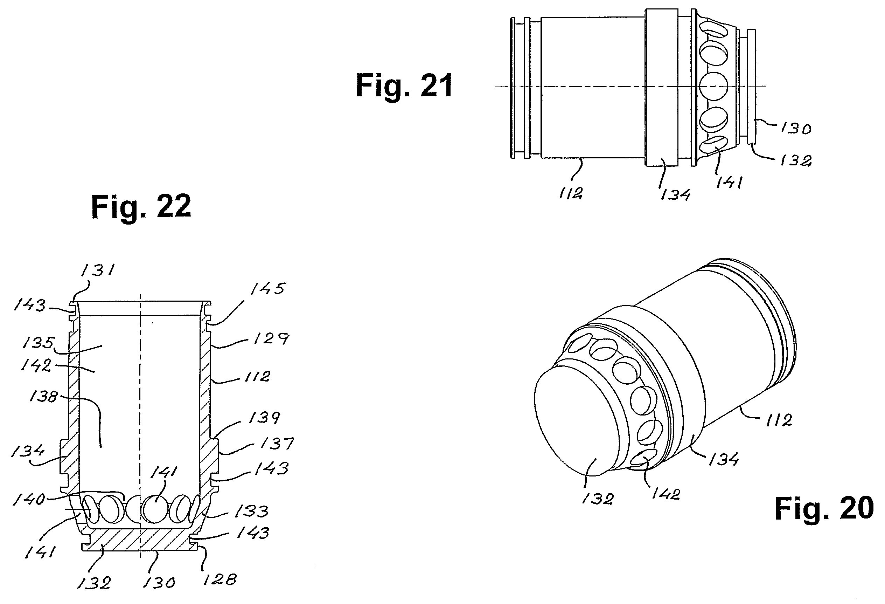

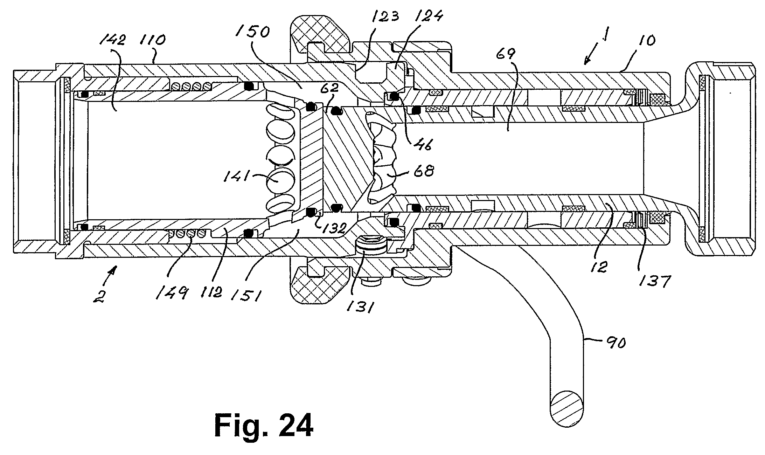

The piston 112 shown more closely in Figs. 21, 22 is also made in one piece. It has a front end with a closed, i.e. non-openworked end surface 130, which forms a pressure surface, and a rear end with an open, i.e. openworked end surface 131. The piston 112 comprises a valve body 132, which extends a predetermined length from the non-openworked pressure surface 130, a side passage portion 133, which connects to the valve body 132, a guiding portion 134, which connects to the side passage portion 133, and a spring supporting portion 129. The valve body 132 has a rotationally symmetrical cylinder surface 128 for sealing interaction with the cylinder surface 127 of the housing 110. The valve body 132 has a diameter which is slightly larger than the diameter of the valve body 62 of the female member 1. The spring supporting portion 129 surrounds an axially outer cylinder-shaped space 135, which will be in open communication with the space 136 (see Fig. 16) of the connecting portion 113. The guiding portion 134 surrounds an axially inner space 138, which extends to the side passage portion 133 and has, on its outside, a rotationally symmetrical cylinder surface 137 with a diameter being slightly smaller than the diameter of the cylinder surface 126 of the housing to allow a sliding fit therebetween. The spring supporting portion 129 has a slightly smaller diameter than the guiding portion 134 so that a radial, annular support surface 139 for a helical spring 149 is formed at the transition between these two portions. The side passage portion 133 is conically formed with a conical outside and a conical inside and surrounds a space 140, which transitions into the space 138 of the guiding portion 134. The wall of the side passage portion 133 is provided with a plurality of through-going, radial side apertures 141, evenly distributed in the circumferential direction, which open immediately behind the valve body 132 and together form a side passage. Thereby, the piston 112 exhibits a flow passage 142, which is formed by said space 135 of the spring supporting portion 129, said space 138 of the guiding portion 134, and said side apertures 141 of the side passage portion 133. The valve body 132 and the guiding portion 134 are provided with external, annular grooves 143 for suitable sealing rings 144 for sealing interaction with the cylinder surfaces 126, 127 of the housing 110 and the inner cylinder surface of the connecting portion 113. Furthermore, the piston 112 is provided with an annular groove 145 for a suitable slide bearing 146. When mounting the piston 112 and the connecting sleeve 113 in the housing 110, a peripheral space 147 is formed between the piston 112 and the housing 110, as is evident from Fig. 16, said space 147 being delimited in the axial direction by the support surface 139 of the guiding portion 134 and an opposite, inner annular end surface 148 of the connecting sleeve 113 screwed into the housing 110. Before the connecting sleeve 113 is screwed into the housing 110, a helical spring 149, which is intended to be compressed by the connecting sleeve 113 when it is screwed into the housing 110, is placed in the space 147 to thereby apply a pressure against the piston 112 so that its valve body 132 is maintained in a forward, self-closing position against the housing. During an axial inward pressing of the piston 112 in the housing 110, the spring is compressed further, as is evident from Fig. 24.

The centre axes of the housing 110 and the piston 112, as well as their inner and outer cylinder surfaces, coincide with the centre axis of the coupling member 2.

The male member 2 can, for example, be attached to a non-movable piping connection to a stationary tank, while the female member 1 is carried on a hose, which is connected to a mobile container, e.g. a tanker lorry for delivery of a fluid. The thus movable female member 1 is coupled to the thus fixed male member 2 by being moved axially toward the female member 1 so that the male member 2 is received in the front space 16 of the housing 10 and its contact rollers 31 are received in the groove 123 via the axial recesses 125. Thereafter, the female member 1 is rotated about its centre axis until the contact rollers 31 get engaged behind the flange 124 of the housing 110. During this initial rotation, the roller axles 85, 86 (see Fig. 14) will be moved in the extensions 80 (see Figs. 10-12) of the cam grooves 78, 79 to the helical portion of the cam grooves 78, 79. During this initial rotation of the housing 10 relative to the male member 2, it is ensured that the female member 1 and the male member 2 are fixed to each other in the axial direction, before the pistons 12, 112 are moved in an axial direction. During the continued rotation of the housing 10, the rollers 89 of the roller axles 85, 86 will press against the front cam profiles 81 of the cam grooves 78, 79, whereby the piston 12 is caused to move into the male member 2 while being pressed against its piston 112, so that their valve bodies are set to open positions. The movement of the piston 12 becomes linear by means of the axial cam groove 84 and the roller axle 91, which follows a cam surface 95 (see Figs. 11, 13, 14). When opening the valve bodies 62, 132, an annular space 150 is created between the housing 110 of the male member 2 (see Fig. 24) and the portions of the two pistons 12, 112 facing each other, so that an intermediate flow passage 151, which interconnects the flow passages 69, 142 of the pistons 12, 112, is established.

According to the invention, the cam device is adapted for engagement with the outside of the piston 12. In the embodiment described and shown above, the cam grooves 78, 79 are arranged in the outside of the piston 12, while the cam followers 85, 86 are fixedly arranged in the housing 10 in order to extend through the slots in the carrier and to be received in the cam grooves. The invention also includes the embodiment where the reverse condition applies, i.e. that the cam grooves are arranged in the inside of the housing, while the cam followers are fixedly arranged in or on the outside of the piston, preferably without penetrating through the piston wall into the flow passage.

## Claims

1. A coupling member (1), comprising
- a tubular housing (10) having an axially through-going opening (15),
- a tubular carrier (11) having an axially through-going, cylindrical opening (42) and being rotatably arranged and axially fixed in the housing (10),
- an elongated piston (12) comprising a valve body (62) arranged in the carrier (11) for sealing of its through-going opening (42),
- a cam device comprising at least one cam groove (78, 79; 84) and associated cam follower (85, 86; 91) and adapted to be actuated by rotation of the housing (10) relative to the carrier (11) in order to move the piston (12) relative to the carrier (11), and
- a flow passage (69) adapted to be opened and closed by movement of the piston (12) out of or into, respectively, the carrier (11) by means of said cam device,
- wherein the flow passage (69) is arranged in the piston (12) itself,
- wherein the cam device is adapted to be in engagement with the outside of the piston (12), and
- wherein the flow passage (69) is free of surfaces other than the ones delimiting the flow passage (69) itself
**characterized in**
- **that** at least one of said at least one cam groove (78, 79) is helical and arranged on the outside of the piston (12), and an associated cam follower (85, 86) is arranged in an opening (55, 56) of the carrier (11) extending in the circumferential direction in order to be received in and interact with said at least one helical cam groove (78, 79), and that the housing (10) is adapted to be rotated relative to the carrier (11) for actuating the cam device for movement of the piston (12) relative to the carrier (11).

2. The coupling member (1) according to claim 1, **characterized in that** the piston (12) is made in one piece, wherein the flow passage (69) is free of joints.

3. The coupling member (1) according to claim 1 or 2, **characterized in that** the piston (12) comprises a side passage portion (63) which connects to the valve body (62) and which is provided with a plurality of side apertures (68) being part of said flow passage (69).

4. The coupling member (1) according to claim 3, **characterized in that** the piston (12) comprises a guiding portion (64) with an external, rotationally symmetrical cylinder surface (100) having a constant diameter and being arranged at a distance from the valve body (62) of the piston (12), and that the axially through-going opening (42) of the carrier (11) has a rotationally symmetrical cylinder surface (38) having a diameter being slightly larger than said cylinder surface (100) of the guiding portion (64) of the piston (12) to allow a sliding fit therebetween.

5. The coupling member (1) according to claim 4, **characterized in that** the valve body (62), the side passage portion (63), and the guiding portion (64) have external cylinder surfaces (98, 99, 100) with one and the same diameter.

6. The coupling member (1) according to any one of the claims 3-5, **characterized in that** also the side passage portion (63) and the guiding portion (64) connect to each other.

7. The coupling member (1) according to any one of the claims 1-6, **characterized in that** the piston (12) comprises a connecting portion (65) arranged at the end of the piston (12) facing away from the valve body (62).

8. The coupling member (1) according to claim 7, **characterized in that** the connecting portion (65) has a larger diameter than said guiding portion (64) of the piston (12), and that the guiding portion (64) extends to the connecting portion (65).

9. The coupling member (1) according to claim 8, **characterized in that** said opening (55, 56) is elongated and extends in the circumferential direction and that said cam follower (85, 86) is extended radially outward from the carrier (11) in order to extend freely through its opening (55, 56) and be fixed to the housing (10).

10. The coupling member (1) according to claim 9, **characterized in that** the housing (10) has a radially through-going, threaded aperture (26) for screwing in the cam follower (85, 86) comprising an externally threaded screw portion (88) and an axle journal (87) supporting a roller (89) for interaction with the cam profiles (81, 82).

11. The coupling member (1) according to claim 10, **characterized in that** the cam device comprises two cam grooves (78, 79) and two associated cam followers, peripheral openings (55, 56) in the carrier (11), and threaded apertures (26) in the housing (10).

12. The coupling member (1) according to any one of the claims 9-11, **characterized in that** the cam device comprises an axial groove (84) arranged on the outside of the piston (12), and an associated cam follower (91) fixedly arranged in the carrier (11) and received in the axial groove (84) in order to transform a rotational movement, acting on the piston (12), into an axial movement of the piston (12).

13. A coupling for establishing a connection between two containers via piping connections for fluid transfer therebetween, said coupling comprising two coupling members (1, 2), **characterized in that** one of the coupling members (1, 2) is designed according to any one of the claims 1-12.

14. The coupling according to claim 13, **characterized in that** the other of the coupling members (1, 2) comprises a tubular housing (110) having an axially through-going opening (118),
- an elongated piston (112) comprising a valve body (132) arranged in the housing (110) for sealing of its through-going opening (118), and
- a flow passage (142) adapted to be opened and closed by movement of the piston (112) into the housing (110) while being influenced by external forces,
- that the flow passage (142) is arranged in the piston (112) itself, and
- that the flow passage (142) is free of surfaces other than the ones delimiting the flow passage (142) itself.

15. The coupling according to claim 14, **characterized in that** the piston (112) is made in one piece, wherein the flow passage (142) is free of joints.

16. The coupling according to claim 14 or 15, **characterized in that** the piston (112) comprises a side passage portion (133) connecting to the valve body (132) and being provided with a plurality of side apertures (141) being part of said flow passage (142).

17. The coupling according to claim 16, **characterized in that** the piston (112) comprises a guiding portion (134) with an external, rotationally symmetrical cylinder surface (137) having a constant diameter and being arranged at a distance from the valve body (132) of the piston (112), and that the axially through-going opening (118) of the housing (110) has a rotationally symmetrical cylinder surface (126) having a diameter slightly larger than said cylinder surface (137) of the guiding portion (134) of the piston (112) to allow a sliding fit therebetween.

18. The coupling according to claim 17, **characterized in that** also the side passage portion (133) and the guiding portion (134) transition into each other.

19. The coupling according to any one of the claims 14-18, **characterized in that** the piston (112) comprises a connecting portion (113) arranged at the end of the piston (112) facing away from the valve body (132).

20. The coupling according to claim 19, **characterized in that** the connecting portion (113) is adapted to surround a rear portion of the piston (112).

21. The coupling according to any one of the claims 14-20, **characterized in that** it comprises a helical spring (149) surrounding the piston (112) and being biased between a support surface (139) of the piston (112) and an inner end surface (148) of the connecting sleeve (113) in order to maintain the valve body (132) in a closed position with its spring force.

22. The coupling according to any one of the claims 13 - 21, **characterized in that** the coupling members (1, 2), in an interconnected condition, have their flow passages (69, 142) interconnected with each other for fluid flow via an intermediate, peripheral flow passage (150), which is delimited radially inward by the valve bodies (62, 132) and the side passage portions (63, 122) and which communicates with the side apertures (68, 141).

## Patentansprüche

1. Kupplungselement (1), welches folgendes aufweist:
- ein rohrförmiges Gehäuse (10), das einen axial durchgehende Öffnung (15) aufweist,
- einen rohrförmigen Träger (11), der eine axial durchgehende, zylindrische Öffnung (42) aufweist und in dem Gehäuse (10) drehbar angeordnet und axial befestigt ist,
- einen länglichen Kolben (12), der einen Ventilkörper (62) aufweist und in dem Träger (11) zum Abdichten dessen durchgehender Öffnung (42) angeordnet ist,
- eine Mitnehmereinrichtung, die wenigstens eine Kurvennut (78, 79; 84) und einen damit verbundenen Nockenmitnehmer (85, 86; 91) aufweist und dafür vorgesehen ist, durch die Rotation des Gehäuses (10) relativ zu dem Träger (11) betätigt zu werden, um den Kolben (12) relativ zu dem Träger (11) zu bewegen, und
- einen Strömungsdurchgang (69), der dafür vorgesehen ist, durch die Bewegung des Kolbens (12) aus oder in den Träger (11) mittels der Mitnehmereinrichtung geöffnet und geschlossen zu werden,
- wobei der Strömungsdurchgang (69) in den Kolben (12) selbst angeordnet ist,
- wobei die Mitnehmereinrichtung dafür vorgesehen ist, in Eingriff mit der Außenseite des Kolbens (12) zu sein, und
- wobei der Strömungsdurchgang (69) frei von anderen Oberflächen als denjenigen ist, die den Strömungsdurchgang (69) selbst beschränken,
**dadurch gekennzeichnet, dass**
- wenigstens eine der wenigstens einen Kurvennut (78, 79) spiralförmig und auf der Außenseite des Kolbens (12) angeordnet ist, und ein damit verbundener Nockenmitnehmer (85, 86) in einer Öffnung (55, 56) des Trägers (11), die sich in der Umfangsrichtung erstreckt, angeordnet ist, um von der wenigstens einen spiralförmigen Kurvennut (78, 79) aufgenommen zu werden und mit derselben zusammenzuarbeiten, und dass das Gehäuse (10) dafür vorgesehen ist, relativ zu dem Träger (11) zu rotieren, um die Mitnehmereinrichtung zur Bewegung des Kolbens (12) relativ zu dem Träger (11) zu betätigen.

2. Kupplungselement (1) nach Anspruch 1,
**dadurch gekennzeichnet, dass**
der Kolben (12) aus einem Stück hergestellt ist, wobei der Strömungsdurchgang (69) frei von Verbindungen ist.

3. Kupplungselement (1) nach Anspruch 1 oder 2,
**dadurch gekennzeichnet, dass**
der Kolben (12) einen seitlichen Durchgangsabschnitt (63) aufweist, der mit dem Ventilkörper (62) verbunden ist und der mit einer Vielzahl von seitlichen Öffnungen (68) versehen ist, die Teil des Strömungsdurchgangs (69) sind.

4. Kupplungselement (1) nach Anspruch 3,
**dadurch gekennzeichnet, dass**
der Kolben (12) einen Führungsabschnitt (64) mit einer äußeren, rotationssymmetrischen Zylinderfläche (100) aufweist, die einen konstanten Durchmesser aufweist und mit einem Abstand von dem Ventilkörper (62) des Kolbens (12) angeordnet ist, und dass die axial durchgehende Öffnung (42) des Trägers (11) eine rotationssymmetrische Zylinderfläche (38) aufweist, die einen Durchmesser aufweist, der geringfügig größer als die Zylinderfläche (100) des Führungsabschnitts (64) des Kolbens (12) ist, um einen Gleitsitz dazwischen zu ermöglichen.

5. Kupplungselement (1) nach Anspruch 4,
**dadurch gekennzeichnet, dass**
der Ventilkörper (62), der seitliche Durchgangsabschnitt (63) und der Führungsabschnitt (64) äußere Zylinderflächen (98, 99, 100) mit ein und demselben Durchmesser aufweisen.

6. Kupplungselement (1) nach einem der Ansprüche 3 - 5,
**dadurch gekennzeichnet, dass**
auch der seitliche Durchgangsabschnitt (63) und der Führungsabschnitt (64) miteinander verbunden sind.

7. Kupplungselement (1) nach einem der Ansprüche 1 - 6,
**dadurch gekennzeichnet, dass**
der Kolben (12) einen Verbindungsabschnitt (65) aufweist, der an dem Ende des Kolbens (12) angeordnet ist, das von dem Ventilkörper (62) weg zeigt.

8. Kupplungselement (1) nach Anspruch 7,
**dadurch gekennzeichnet, dass**
der Verbindungsabschnitt (65) einen größeren Durchmesser als der Führungsabschnitt (64) des Kolbens (12) aufweist, und dass der Führungsabschnitt (64) sich bis zu dem Verbindungsabschnitt (65) erstreckt.

9. Kupplungselement (1) nach Anspruch 8,
**dadurch gekennzeichnet, dass**
die Öffnung (55, 56) länglich ist und sich in der Umfangsrichtung erstreckt, und dass der Nockenmitnehmer (85, 86) sich von dem Träger (11) radial nach außen erstreckt, um sich frei durch seine Öffnung (55, 56) zu erstrecken und in dem Gehäuse (10) befestigt zu sein.

10. Kupplungselement (1) nach Anspruch 9,
**dadurch gekennzeichnet, dass**
das Gehäuse (10) eine radial durchgehende, mit einem Gewinde versehene Ausnehmung (26) zum Einschrauben in den Nockenmitnehmer (85, 86) aufweist, die einen mit einem Außengewinde versehenen Schraubabschnitt (88) und einen Lagerzapfen (87) aufweist, der eine Rolle (89) trägt, um mit Nockenprofilen (81, 82) zusammenzuwirken.

11. Kupplungselement (1) nach Anspruch 10,
**dadurch gekennzeichnet, dass**
die Mitnehmereinrichtung zwei Kurvennuten (78, 79), zwei damit verbundene Nockenmitnehmer, Umfangsöffnungen (55, 56) in dem Träger (11) und mit Gewinde versehene Ausnehmungen (26) in dem Gehäuse (10) aufweist.

12. Kupplungselement (1) nach einem der Ansprüche 9 - 11,
**dadurch gekennzeichnet, dass**
die Mitnehmereinrichtung eine Axialnut (84) aufweist, die auf der Außenseite des Kolbens (12) angeordnet ist und einen damit verbundenen Nockenmitnehmer (91) aufweist, der fest in dem Träger (11) angeordnet und in der Axialnut (84) aufgenommen ist, um eine Rotationsbewegung, die auf den Kolben (12) wirkt, in eine Axialbewegung des Kolbens (12) umzuwandeln.

13. Kupplung zum Herstellen einer Verbindung zwischen zwei Behältern über Leitungsverbindungen für einen Fluidtransfer dazwischen, wobei die Kupplung zwei Kupplungselemente (1, 2) aufweist,
**dadurch gekennzeichnet, dass**
eines der Kupplungselemente (1, 2) gemäß einem der Ansprüche 1 - 12 ausgebildet ist.

14. Kupplung nach Anspruch 13,
**dadurch gekennzeichnet, dass**
das andere der Kupplungselemente (1, 2) ein rohrförmiges Gehäuse (110) aufweist, das eine axial durchgehende Öffnung (118) aufweist,
- einen länglichen Kolben (112), der einen Ventilkörper (132) aufweist und in dem Gehäuse (110) angeordnet ist, um die durchlaufende Öffnung (118) abzudichten, und
- einen Strömungsdurchgang (142), der dafür vorgesehen ist, durch die Bewegung des Kolbens (112) in das Gehäuse (110) geöffnet und geschlossen zu werden, während er von äußeren Kräften beeinflusst ist,
- dass der Strömungsdurchgang (142) in dem Kolben (112) selbst angeordnet ist, und
- dass der Strömungsdurchgang (142) frei von anderen Flächen als denjenigen ist, die den Strömungsdurchgang (142) selbst beschränken.

15. Kupplung nach Anspruch 14,
**dadurch gekennzeichnet, dass**
der Kolben (112) aus einem Stück hergestellt ist, wobei der Strömungsdurchgang (142) frei von Verbindungen ist.

16. Kupplung nach Anspruch 14 oder 15,
**dadurch gekennzeichnet, dass**
der Kolben (112) einen seitlichen Durchgangsabschnitt (133) aufweist, der mit dem Ventilkörper (132) verbunden ist und der mit einer Vielzahl von seitlichen Öffnungen (141) versehen ist, die Teil des Strömungsdurchgangs (142) sind

17. Kupplung nach Anspruch 16,
**dadurch gekennzeichnet, dass**
der Kolben (112) einen Führungsabschnitt (134) mit einer äußeren, rotationssymmetrischen Zylinderfläche (137) aufweist, die einen konstanten Durchmesser aufweist und mit einem Abstand von dem Ventilkörper (132) des Kolbens (112) angeordnet ist, und dass die axial durchgehende Öffnung (118) des Gehäuses (110) eine rotationssymmetrische Zylinderfläche (126) aufweist, die einen Durchmesser aufweist, der geringfügig größer als die Zylinderfläche (137) des Führungsabschnitts (134) des Kolbens (112) ist, um einen Gleitsitz dazwischen zu ermöglichen.

18. Kupplung nach Anspruch 17,
**dadurch gekennzeichnet, dass**
auch der seitliche Durchgangsabschnitt (133) und der Führungsabschnitt (134) miteinander verbunden sind.

19. Kupplung nach einem der Ansprüche 14 - 18,
**dadurch gekennzeichnet, dass**
der Kolben (112) einen Verbindungsabschnitt (113) aufweist, der an dem Ende des Kolbens (112) angeordnet ist, das von dem Ventilkörper (132) weg zeigt.

20. Kupplung nach Anspruch 19,
**dadurch gekennzeichnet, dass**
der Verbindungsabschnitt (113) dafür vorgesehen ist, einen hinteren Abschnitt des Kolbens (112) zu umgeben.

21. Kupplung nach einem der Ansprüche 14 - 20,
**dadurch gekennzeichnet, dass**
sie eine spiralförmige Feder (149) aufweist, welche den Kolben (112) umgibt und zwischen einer Abstützfläche (139) des Kolbens (112) und einer inneren Endfläche (148) der Verbindungsbuchse (113) vorgespannt ist, um mit ihrer Federkraft den Ventilkörper (132) in einer geschlossenen Position zu halten.

22. Kupplung nach einem der Ansprüche 13 - 21,
**dadurch gekennzeichnet, dass**
bei den Kupplungselementen (1, 2) in einem miteinander verbundenen Zustand deren Strömungsdurchgängen (69, 142) miteinander verbunden sind, um eine Fluidströmung über einen dazwischen angeordneten Umfangsströmungsdurchgang (150) herzustellen, der radial nach innen durch die Ventilkörper (62, 132) und die seitlichen Durchgangsabschnitte (63, 122) begrenzt ist und der mit den seitlichen Ausnehmungen (68, 141) in Verbindung ist.

## Revendications

1. Élément de couplage (1), comportant
- un corps tubulaire (10) ayant une ouverture axiale traversante cylindrique (15),
- un support tubulaire (11) ayant une ouverture axiale traversante cylindrique (42) et étant montée rotative et fixée axialement dans le corps (10),
- un piston allongé (12) comportant un corps de soupape (62) disposé dans le support (11) pour obturer son ouverture traversante (42),
- un dispositif de came comportant au moins une rainure de came (78, 79 ; 84) et un suiveur de came associé (85, 86 ; 91) et agencé pour être actionné par rotation du corps (10) par rapport au support (11), en vue de déplacer le piston (12) par rapport au support (11), et
- un passage de flux (69) agencé pour être ouvert et fermé par déplacement du piston (12) respectivement hors ou dans le support (11) au moyen dudit dispositif de came,
dans lequel
- le passage de flux (69) est ménagé directement dans le piston (12),
dans lequel
- le dispositif de came est agencé pour être en appui contre l'extérieur du piston (12),
et
dans lequel
- le passage de flux (69) est libre de surfaces autres que celles qui délimitent le
passage de flux (69) lui-même,
**caractérisé en ce que**,
- au moins une de ladite au moins une rainure de came (78, 79) est hélicoïdale et disposée sur l'extérieur du piston (12), et un suiveur de came associé (85, 86) est ménagé sur l'ouverture (55, 56) du support (11) en s'étendant selon une direction circonférentielle en vue d'être reçue dans et d'interagir avec ladite au moins une rainure de came hélicoïdale (78, 79), et **en ce que** le corps (10) est agencé pour être tourné relativement au support (11) pour actionner le dispositif de came pour mouvoir le piston (12) par rapport au support (11).

2. Élément de couplage (1) selon la revendication 1, **caractérisé en ce que** le piston (12) est réalisé d'une pièce, dans lequel le passage de flux (69) est libre de joints.

3. Élément de couplage (1) selon l'une des revendications 1 ou 2, **caractérisé en ce que** le piston (12) comporte une portion de passage latéral (63) qui est connectée au corps de soupape (62) et qui est pourvue d'une pluralité d'ouvertures latérales (68) qui font partie dudit passage de flux (69).

4. Élément de couplage (1) selon la revendication 3, **caractérisé en ce que** le piston (12) comporte une portion de guidage (64) avec une surface (100) externe, cylindrique et symétrique en rotation, ayant un diamètre constant et étant agencée à distance par rapport au corps de soupape (62) du piston (12), et **en ce que** l'ouverture traversante axiale (42) du support (11) a une surface cylindrique (38), symétrique en rotation, ayant un diamètre légèrement plus grand que la surface cylindrique (100) de la portion de guidage (64) du piston (12), pour permettre une liaison coulissante entre elles.

5. Élément de couplage (1) selon la revendication 4, **caractérisé en ce que** le corps de soupape (62), la portion de passage latéral (63) et la portion de guidage (64) ont des surfaces externes cylindriques (98, 99, 100) avec un seul et même diamètre.

6. Élément de couplage (1) selon l'une quelconque des revendications 3 -5, **caractérisé en ce que** la portion de passage latéral (63) et la portion de guidage (64) sont également connectées l'une à l'autre.

7. Élément de couplage (1) selon l'une quelconque des revendications 1 -6, **caractérisé en ce que** le piston (12) comporte une portion de connexion (65) disposée à l'extrémité du piston (12) opposée au corps de soupape (62).

8. Élément de couplage (1) selon la revendication 7, **caractérisé en ce que** la portion de connexion (65) a un diamètre plus grand que ladite portion de guidage (64) du piston (12), et **en ce que** la portion de guidage (64) s'étend vers la portion de connexion (65).

9. Élément de couplage (1) selon la revendication 8, **caractérisé en ce que** ladite ouverture (55, 56) est allongée et s'étend dans la direction circonférentielle et **en ce que** ledit suiveur de came (85, 86) est étendu radialement à l'extérieur du support (11) pour s'étendre librement à travers son ouverture (55, 56) et être fixé au corps (10).

10. Élément de couplage (1) selon la revendication 9, **caractérisé en ce que** le corps (10) comporte une ouverture radiale traversante filetée (26), dans laquelle est vissé le suiveur de came (85, 86) comportant une portion (88) filetée extérieurement et un tourillon d'axe (87) supportant un galet (99) pour interagir avec les profils de came (81, 82).

11. Élément de couplage (1) selon la revendication 10, **caractérisé en ce que** le dispositif de came comprend deux rainures de came (78, 79) et deux suiveurs de came associés, des ouvertures périphériques (55, 56) dans le support (11) et des ouvertures filetées (26) dans le corps (10).

12. Élément de couplage (1) selon l'une quelconque des revendications 9-11, **caractérisé en ce que** le dispositif de came comporte une rainure axiale (84) ménagée sur le côté extérieur du piston (12), et un suiveur de came associé (91) monté de façon fixe sur le support (11) et engagé dans la rainure axiale (84) en vue de transformer un mouvement rotatif, agissant sur le piston (12), en un mouvement axial du piston (12).

13. Couplage pour établir une connexion entre deux conteneurs via des connexions de tubes pour transférer un fluide entre eux, ledit couplage comportant deux organes de connexion (1, 2), **caractérisé en ce que** l'un des organes de connexion (1, 2) étant réalisé conformément à l'une des revendications 1 -12.

14. Couplage selon la revendication 13, **caractérisé en ce que** l'autre des organes de connexion (1, 2) comporte un corps tubulaire (110) ayant une ouverture traversante axiale (118),
- un piston allongé (112) comportant un corps de soupape (132) disposé dans le corps (110) pour obturer son ouverture traversante (118), et
- un passage de flux (142) agencé pour être ouvert et fermé par le déplacement du piston (112) dans le corps (110), tout en étant influencé par des forces extérieures,
- **en ce que** le passage de flux (142) est disposé dans le piston (112) lui-même, et
- **en ce que** le passage de flux (142) est libre de surfaces autres que celles qui délimitent le passage de flux lui-même.

15. Couplage selon la revendication 14, **caractérisé en ce que** le piston (112) est réalisé d'une pièce, dans lequel le passage de flux (142) est libre de joints.

16. Couplage selon les revendications 14 ou 15, **caractérisé en ce que** le piston (112) comporte une portion de passage latéral (133) qui est connectée au corps de soupape (132) et qui est pourvue d'une pluralité d'ouvertures latérales (141) qui font partie dudit passage de flux (142).

17. Couplage selon la revendication 16, **caractérisé en ce que** le piston (112) comporte une portion de guidage (134) avec une surface (137) externe, cylindrique et symétrique en rotation, ayant un diamètre constant et étant agencée à distance par rapport au corps de soupape (132) du piston (112), et **en ce que** l'ouverture traversante axiale (118) du corps (110) a une surface cylindrique (126), symétrique en rotation, ayant un diamètre légèrement plus grand que la surface cylindrique (137) de la portion de guidage (134) du piston (112), pour permettre une liaison coulissante entre elles.

18. Couplage selon la revendication 17, **caractérisé en ce que** la portion de passage latéral (133) et la portion de guidage (134) sont également connectées l'une à l'autre.

19. Couplage selon l'une quelconque des revendications 14 - 18, **caractérisé en ce que** le piston (112) comporte une portion de connexion (113) disposée à l'extrémité du piston (112) opposée au corps de soupape (132).

20. Couplage selon la revendication 19, **caractérisé en ce que** la portion de connexion (113) est agencée pour entourer une portion arrière du piston (112).

21. Couplage selon l'une quelconque des revendications 14-20, **caractérisé en ce qu'**il comporte un ressort hélicoïdal (149) entourant le piston (112) et étant comprimé entre une surface de support (139) du piston (112) et une surface intérieure d'extrémité (148) du manchon de connexion (113) afin de maintenir le corps de soupape (132) dans une position fermée avec sa force ressort.

22. Couplage selon l'une quelconque des revendications 13-21, **caractérisé en ce que** l'organe de connexion (1, 2) dans son état interconnecté, a ses passages de flux (69, 142) interconnectés l'un avec l'autre pour assurer un flux de fluide via un passage de flux intermédiaire périphérique (150), qui est délimité radialement vers l'intérieur par des corps de soupapes (62, 132) et les portions de passage latéraux (63, 122) et qui communiquent avec les ouvertures latérales (68, 141).
